# EUROPÄISCHE PATENTANMELDUNG

(11) **EP 2 500 205 A2**
(43) Veröffentlichungstag der Anmeldung: **19.09.2012**
(21) Anmeldenummer: 11195772.6
(22) Anmeldetag: 27.12.2011
(51) Int. Cl.: B60L 11/18

(54) **Ladevorrichtung für Kraftfahrzeuge sowie Verfahren zum Laden eines Speichers für elektrische Ladung in einem Kraftfahrzeug**

(30) Priorität: 16.02.2011 DE 102011004215
(71) Anmelder: Siemens Aktiengesellschaft, 80333 München (DE)
(72) Erfinder: Albrecht, Christian, 93177 Altenthann (DE); Kleemeier, Manfred, 93073 Neutraubling (DE); Niedenzu, Wolfgang, 93309 Kelheim (DE); Pilsl, Wolfgang, 93107 Thalmassing (DE)

(57) **Zusammenfassung**

In einer Ladevorrichtung (10) für Kraftfahrzeuge gibt es einen Überlastschalter, der geöffnet wird, wenn über eine Mindestzeitdauer eine Stromstärke oberhalb eines Stromstärkengrenzwertes vorherrscht. Vorliegend ist der Stromstärkengrenzwert und/oder die Mindestzeitdauer variabel. Bevorzugt werden diese Werte in Abhängigkeit von einer durch die Ladevorrichtung (10) festgestellten Eigenschaft eines Ladekabels (18) bzw. eines angeschlossenen Kraftfahrzeugs (12) festgelegt.

## Beschreibung

Die Erfindung betrifft eine Ladevorrichtung für Kraftfahrzeuge nach dem Oberbegriff des Patentanspruchs 1 sowie ein Verfahren zum Laden eines Speichers für elektrische Ladung in einem Kraftfahrzeug, welches über ein Ladekabel mit einer Ladevorrichtung gekoppelt ist.

Die Erfindung befasst sich somit mit der Ausgestaltung und Betriebsweise einer Ladevorrichtung bzw. Ladestation, die die Zufuhr von elektrischer Ladung insbesondere aus einem öffentlichen Stromnetz zu einer Batterie, einem Kondensator oder sonstigen Speicher für elektrische Ladung in einem Kraftfahrzeug ermöglicht.

Typischerweise gibt es an der Ladevorrichtung eine Buchse, in die ein Ladekabel einsteckbar ist. Das Ladekabel wird auf der anderen Seite mit dem Kraftfahrzeug gekoppelt, typischerweise dort ebenfalls in eine Buchse eingesteckt.

Es gibt noch keine Normen dergestalt, dass jedes Kraftfahrzeug und jedes Ladekabel exakt zu jeder Ladevorrichtung passen würden.

Insbesondere können an ein und derselben Steckdose Leitungen mit unterschiedlichen Dauerbelastbarkeiten angeschlossen werden. Es ist allerdings bekannt, dass die Dauerbelastbarkeit aus einer Leitung oder einem Kraftfahrzeug auslesbar ist, indem in der Leitung bzw. dem Kraftfahrzeug an vorbestimmter Stelle ein Widerstandselement mit einem bestimmten Widerstandswert vorgesehen ist.

Gibt man die Dauerbelastbarkeit in Einheiten von Stromstärke an, so kann es Ladevorrichtungen geben, die dazu ausgelegt sind, mit Leitungen einer Dauerbelastbarkeit von 32 A gekoppelt zu werden. Es kann nun sein, dass eine Leitung mit einer geringeren Dauerbelastbarkeit mit der Ladevorrichtung gekoppelt wird, z. B. von 13 A. In diesem Fall muss die Ladeleitung gegen Kurzschluss und Überlast geschützt werden. Hierbei muss den Eigenschaften der Leitung, insbesondere eben ihrer Dauerbelastbarkeit, Rechnung getragen werden.

Ein Überlastschutz kann insbesondere durch einen Leitungsschutzschalter in der Ladevorrichtung bereitgestellt werden. Damit der Überlastschutz an eine angeschlossene Ladeleitung angepasst ist, sieht man bisher eine Mehrzahl von Leitungsschutzschaltern in der Ladevorrichtung vor. Jedem Leitungsschutzschalter ist ein eigener Zweig zugeordnet. Zwischen den Zweigen kann umgeschaltet werden, wobei die Zweige insbesondere gegenseitig verriegelt sein müssen. Die Ladeleitungen werden anhand des genannten Widerstandselementes erkannt, und die Leitungsvorrichtung schaltet nach Erkennung der Ladeleitung selbständig einen bestimmten Zweig zu.

Das Vorsehen einer Mehrzahl von Zweigen in einer Ladevorrichtung und insbesondere das Vorsehen der zugehörigen Mehrzahl von Leitungsschutzschaltern ist aufwendig, kostenintensiv, und die Ladevorrichtung wird übermäßig groß.

Es ist Aufgabe der vorliegenden Erfindung, in hinsichtlich der Kosten und des Platzverbrauchs effektiver Weise bei einer Ladevorrichtung nach dem Oberbegriff des Patentanspruchs 1 für einen an die Ladeleitung angepassten Überlastschutz zu sorgen.

Die Aufgabe wird in einem Aspekt durch eine Ladevorrichtung nach Patentanspruch 1 gelöst, und in einem anderen Aspekt wird sie durch ein Verfahren mit den Merkmalen gemäß Patentanspruch 10 gelöst.

Bei der erfindungsgemäßen Ladevorrichtung für Kraftfahrzeuge mit einem Überlastschalter und eine Einrichtung zum Öffnen des Überlastschalters bei einer über eine Mindestzeitdauer vorherrschenden Stromstärke einer über diesen Überlastschalter fließenden Stromes oberhalb eines Stromstärkengrenzwertes ist erfindungsgemäß vorgesehen, dass die Einrichtung zum Öffnen in zumindest zwei unterschiedlichen Betriebsmodi unterschiedliche Stromstärkengrenzwerte und/oder unterschiedliche Mindestzeitdauern verwendet, um über ein Öffnen des Überlastschalters zu entscheiden.

Bei der vorliegenden Erfindung wird somit immer derselbe Überlastschalter verwendet, aber das, was als Überlast definiert wird, ändert sich je nach den Umständen. Da nur ein Überlastschalter notwendig ist, ist die Ladevorrichtung kompakt baubar und preisgünstig.

Bei einer bevorzugten Ausführungsform der Erfindung ist die Einrichtung zum Öffnen dazu ausgelegt, selbsttätig einen Betriebsmodus einzunehmen und so den zu verwendenden Stromstärkengrenzwert und/oder die Mindestzeitdauer festzulegen. Auf diese Weise ist es von Bedienpersonen unabhängig, dass zu einem Ladekabel oder Kraftfahrzeug jeweils genau der richtige Stromgrenzwert bzw. die richtige Mindestzeitdauer verwendet wird.

Besonders bevorzugt ist es hierbei vorgesehen, wenn eine Einrichtung zum Erfassen von zumindest einer Eigenschaft eines an die Ladevorrichtung angeschlossenen Ladekabels und/oder eines über ein Ladekabel angeschlossenen Kraftfahrzeugs vorgesehen ist, wobei die Einrichtung zum Öffnen des Überlastschalters in Abhängigkeit von dieser erfassten Eigenschaft den Betriebsmodus einzunehmen ausgelegt ist. Hier ist es also eine in der Ladevorrichtung für Kraftfahrzeuge selbst vorgesehene Einrichtung, welche die zugehörigen Informationen gewinnt, so dass die Informationen, eben betreffend die Eigenschaft des Ladekabels bzw. Kraftfahrzeugs, nicht gesondert übermittelt oder eingegeben werden müssen.

Bei einer weiteren bevorzugten Ausführungsform der Erfindung umfasst die Einrichtung zum Öffnen des Überlastschalters eine Einrichtung zum Messen der Stromstärke sowie eine Steuereinrichtung, welche Messwerte der Einrichtung zum Messen empfängt und in Abhängigkeit von diesen Messwerten eine elektromechanische Einheit zum Öffnen ansteuert. In diesem Aspekt beruht die Erfindung auf der Erkenntnis, dass die Stromstärke des über den Überlastschalter fließenden Stroms, die gleichzeitig die Stromstärke des über das Ladekabel fließenden Stroms ist, von dem Widerstand des Ladekabels abhängig ist und damit auch von der Dauerbelastbarkeit desselbigen. Fließt ein höherer Strom ohnehin schon, dann kann auch der Stromstärkengrenzwert höher liegen, und genauso auch die Mindestzeitdauer.

Die Ladevorrichtung gemäß dieser bevorzugten Ausführungsform kann in zwei Varianten vorgesehen werden: Bei einer Variante sind die Einrichtung zum Messen und die Steuereinrichtung als getrennte Bauteile bereitgestellt. Dann lassen sich insbesondere ohnehin bereits vorhandene Bauteile nutzen wie z. B. der Energiezähler, der zur späteren Abrechnung der Kosten des Ladens ohnehin vorhanden ist und wie eine Steuereinrichtung, die die Ladevorrichtung ohnehin steuert. Bei der anderen Variante sind die Einrichtungen zum Messen und die Steuereinrichtung gemeinsam durch einen Mikroprozessor bereitgestellt. Dies ist eine Ausführungsform, die besonders kompakt ist; der Mikroprozessor muss lediglich geeignet programmiert werden, um die Funktionalität zur Verfügung zu stellen.

Bei einer bevorzugten Ausführungsform der Erfindung in einem anderen Aspekt weist die Einrichtung zum Öffnen ein mechanisches Element auf, dessen unterschiedliche Stellungen unterschiedlichen Betriebsmodi entsprechen. Hier macht man sich zunutze, dass manche Bauteile wie z. B. ein Bimetallelement eine mechanische Bewegung vollführen, so dass man auch durch eine Mechanik entsprechende Grenzwerte (den Stromstärkengrenzwert und die Mindestzeitdauer) manipulieren kann.

Bei einer weiteren bevorzugten Ausführungsform der Erfindung ist ein Kurzschlussschalter vorgesehen, der bei einer Stromstärke oberhalb eines Stromstärkengrenzwerts geöffnet wird. Dadurch wird neben der Überlastschutzfunktion auch eine Kurzschlussschutzfunktion bereitgestellt. Man benötigt nur einen Kurzschlussschalter, weil es ja nur den einen Zweig mit dem einen Überlastschalter gibt.

In einer weiteren bevorzugten Ausführungsform der Erfindung ist eine Einrichtung zum Messen einer (Außen-) Temperatur vorgesehen, wobei bei unterschiedlichen Temperaturen unterschiedliche Stromstärkengrenzwerte und/oder Mindestzeitdauern verwendet werden. Hier macht man sich die Variabilität der Grenzwerte für die Stromstärke und die Zeitdauer zunutze, um eine besonders feine Abstimmung zu machen: Die Dauerbelastbarkeit eines Ladekabels kann nämlich insbesondere von seiner Temperatur (und damit üblicherweise der Außentemperatur) abhängen.

Das erfindungsgemäße Verfahren zum Laden eines Speichers für elektrische Ladung in einem Kraftfahrzeug, welches über ein Ladekabel mit einer Ladevorrichtung gekoppelt ist, weisen die Schritte des Erfassens der Art des Ladekabels durch die Ladevorrichtung und des Festlegens eines Grenzwerts für eine Auslösegröße in Abhängigkeit von der Art des Ladekabels auf, wobei der Grenzwert ein Unterbrechen des Ladevorgangs bestimmt. Erfindungsgemäß erfolgt dieses Unterbrechen des Ladevorgangs für zumindest zwei der Grenzwerte unabhängig vom festgelegten Grenzwert an demselben Überlastschalter.

Somit benötigt man weniger Überlastschalter als gemäß dem Stand der Technik, in dem jedem festgelegten Grenzwert genau ein Überlastschalter zugeordnet war.

Bevorzugt wird der Grenzwert auch in Abhängigkeit von einer Temperatur festgelegt, siehe die obigen Erläuterungen hierzu.

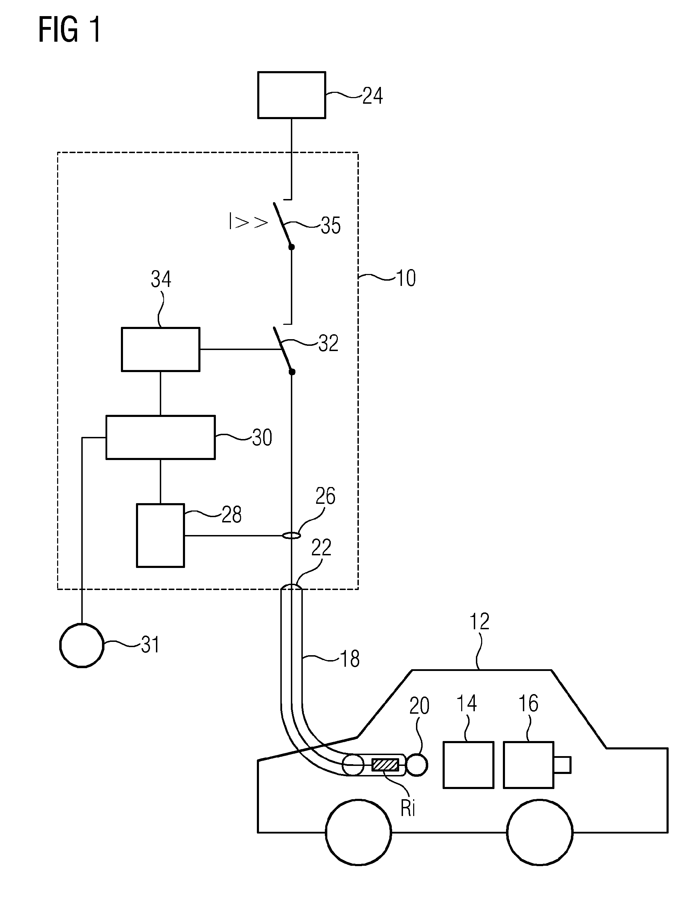

Nachfolgend wird eine bevorzugte Ausführungsform der Erfindung unter Bezug auf die Zeichnung beschrieben, in der
- FIG 1: eine schematische Darstellung einer erfindungsgemäßen Ladevorrichtung mit einem daran angeschlossenen Kraftfahrzeug mit elektrischem Antrieb veranschaulicht und

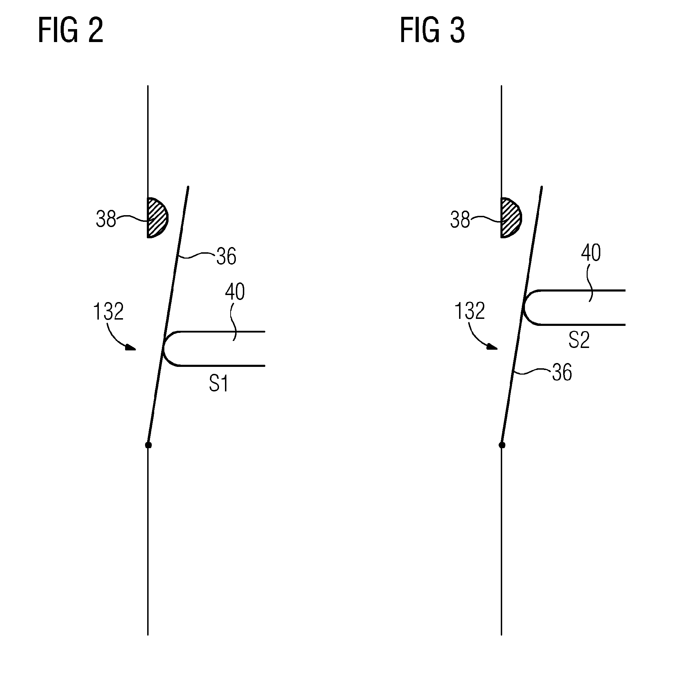

- FIG 2: das Einwirken eines mechanischen Elementes auf ein Bimetallelement in einer ersten Stellung veranschaulicht und
- FIG 3: das Einwirken des mechanischen Elementes aus FIG 2 auf das Bimetallelement bei einer zweiten Stellung veranschaulicht.

Eine im Ganzen mit 10 bezeichnete Ladestation dient zum Laden eines Energiespeichers, z. B. einer Batterie, 14 in einem Kraftfahrzeug mit elektrischem Antrieb 16. Zum Zwecke des Ladens ist das Kraftfahrzeug 12 über ein Ladekabel 18 mit der Ladevorrichtung 10 gekoppelt, und zwar einerseits an einer Steckdose 20 des Kraftfahrzeugs 12 eingesteckt und andererseits an einer Steckdose 22 der Ladevorrichtung 10 angesteckt. Die Ladevorrichtung 10 zieht ihrerseits den Strom aus einem Stromnetz 24.

In dem Ladekabel gibt es einen gesonderten Widerstand Rᵢ, durch den die Ladevorrichtung 10 erkennen kann, wie die Dauerbelastbarkeit des Ladekabels 18 ist. Beispielsweise kann die Stromstärke des über des Ladekabels fließenden Stroms mithilfe eines Wandlers 26 gemessen werden und von einem Zähler 28 ausgewertet werden, und ist die anliegende Spannung bekannt, so lässt sich der Widerstand Rᵢ ermitteln. In Abhängigkeit vom Widerstand Rᵢ legt eine Steuereinrichtung 30 einen Stromstärkengrenzwert und eine Mindestzeitdauer fest. Dies kann insbesondere auch in Abhängigkeit von einer Temperatur erfolgen, die von einem Temperaturfühler 31 gemessen wird. Während des Ladens des Energiespeichers 14 sind Schalter 32 und 35 geschlossen. Mithilfe des Wandlers 26 und des Zählers 28 wird die Stromstärke des fließenden Stroms überwacht. Überschreitet diese für eine Zeitdauer, die größer als die Mindestzeitdauer, den Stromstärkengrenzwert, so steuert die Steuereinrichtung 30 eine Auslöseeinheit 34 an, die den Schalter 32 öffnet. Der Schalter 32 ist somit ein Überlastschalter. Der Schalter 35 ist ein Kurzschlussschalter, der sich bei besonders hohen Strömen öffnet.

Vorliegend wird der ohnehin vorhandene Stromzähler und die Steuereinrichtung 30 genutzt, um die Auslöseeinrichtung 34 anzusteuern. Die Messung der Stromstärke und die Steuerung kann jedoch in einem einzigen Mikroprozessor integriert sein.

Anstelle der vorliegenden Nutzung von Messwerten durch eine Steuereinrichtung 30, durch die nachfolgende Auswertung der Messwerte und das weitere Ansteuern kann auch eine rein mechanische Lösung verwendet werden: So kann ein Überlastschalter nach Art des Schalters 32 als Schalter 132 ausgebildet sein, der ein Bimetallelement 36 aufweist, das auf einem Kontakt 38 anliegt. In Abhängigkeit von dem gemessenen Widerstand Rᵢ des Ladekabels 18 wird nun durch eine geeignete Steuereinrichtung nach Art der Steuereinrichtung 30 ein Stö-βel 40 in eine Stellung S₁ oder in eine Stellung S₂ bewegt. Je nach Stellung muss das Bimetallelement, um sich zu verbiegen, eine unterschiedliche Gegenkraft aufbringen. Somit legt die Stellung des Stößels 40 fest, ab welchem Energieeintrag sich das Bimetallelement 36 von dem Kontakt 38 wegbewegt. Der Energieeintrag ist proportional zu der den Stromstärkengrenzwert überschreitet habenden Stromstärke und der Mindestzeitdauer, für die dies geschieht.

## Patentansprüche

1. Ladevorrichtung (10) für Kraftfahrzeuge (12) mit einem Überlastschalter (32) und einer Einrichtung (28, 30, 34) zum Öffnen des Überlastschalters (32) bei einer über eine Mindestzeitdauer vorherrschenden Stromstärke eines über den Überlastschalter fließenden Stromes oberhalb eines Stromstärkengrenzwerts,
**dadurch gekennzeichnet, dass**
die Einrichtung (26, 28, 30, 34) zum Öffnen in zumindest zwei unterschiedlichen Betriebsmodi unterschiedliche Stromstärkengrenzwerte und/oder Mindestzeitdauern verwendet.

2. Ladevorrichtung (10) nach Anspruch 1, **dadurch gekennzeichnet, dass** die Einrichtung (26, 28, 30, 34) zum Öffnen dazu ausgelegt ist, selbsttätig einen Betriebsmodus einzunehmen und so den zu verwendenden Stromstärkengrenzwert und/oder die Mindestzeitdauer festzulegen.

3. Ladevorrichtung (10) nach Anspruch 2, **gekennzeichnet durch** eine Einrichtung (36, 38, 30) zum Erfassen von zumindest einer Eigenschaft (Rᵢ) eines an die Ladevorrichtung angeschlossenen Ladekabels (18) und/oder eines über ein Ladekabel angeschlossenen Kraftfahrzeugs (12), wobei die Einrichtung zum Öffnen in Abhängigkeit von dieser Eigenschaft den Betriebsmodus einzunehmen ausgelegt ist.

4. Ladevorrichtung (10) nach einem der Ansprüche 1 bis 3, **dadurch gekennzeichnet, dass** die Einrichtung (28, 30, 34) zum Öffnen eine Einrichtung (26, 28) zum Messen der Stromstärke aufweist und eine Steuereinrichtung (30) aufweist, welche Messwerte der Einrichtung (26, 28) zum Messen empfängt und in Abhängigkeit von diesen Messwerten eine elektromechanische Einheit (34) zum Öffnen ansteuert.

5. Ladevorrichtung (10) nach Anspruch 4, **dadurch gekennzeichnet, dass** die Einrichtung zum Messen (26, 28) und die Steuereinrichtung (30) als getrennte Bauteile bereitgestellt sind.

6. Ladevorrichtung nach Anspruch 4, **dadurch gekennzeichnet, dass** die Einrichtung zum Messen und die Steuereinrichtung gemeinsam durch einen Mikroprozessor bereitgestellt sind.

7. Ladevorrichtung nach einem der Ansprüche 1 bis 3, **dadurch gekennzeichnet, dass** die Einrichtung zum Öffnen ein mechanisches Element (40) aufweist, dessen unterschiedliche Stellungen unterschiedlichen Betriebsmodi entsprechen.

8. Ladevorrichtung (10) nach einem der vorhergehenden Ansprüche, **gekennzeichnet durch** einen Kurzschlussschalter (35), der so eingerichtet ist, dass er bei einer Stromstärke oberhalb eines Stromstärkengrenzwertes geöffnet wird.

9. Ladevorrichtung (10) nach einem vorhergehenden Ansprüche, **gekennzeichnet durch** eine Einrichtung (31) zum Messen einer Temperatur, wobei bei unterschiedlichen Temperaturen unterschiedliche Stromstärkengrenzwerte und/oder Mindestzeitdauern verwendet werden.

10. Verfahren zum Laden eines Speichers (14) für elektrische Ladung in einem Kraftfahrzeug (12), welches über ein Ladekabel (18) mit einer Ladevorrichtung (10) gekoppelt ist, mit den Schritten Erfassen der Art des Ladekabels (18) durch die Ladevorrichtung und Festlegen eines Grenzwerts für eine Auslösegröße, der ein Unterbrechen des Ladevorgangs bestimmt, in Abhängigkeit von der Art des Ladekabels (18),
**dadurch gekennzeichnet, dass**
das Unterbrechen des Ladevorgangs für zumindest zwei der Grenzwerte unabhängig vom festgelegten Grenzwert an demselben Überlastschalter erfolgt.

11. Verfahren nach Anspruch 10, **dadurch gekennzeichnet, dass** der Grenzwert auch in Abhängigkeit von einer Temperatur festgelegt wird.
